# EUROPEAN PATENT SPECIFICATION

(11) **EP 4 372 691 B1**
(45) Date of publication and mention of the grant of the patent: **24.07.2024**
(21) Application number: 22208364.4
(22) Date of filing: 18.11.2022
(51) Int. Cl.: G06T 15/08

(54) **SYSTEM AND METHOD FOR MULTI-VOLUME RENDERING**
SYSTEM UND VERFAHREN ZUR MEHRVOLUMENDARSTELLUNG
SYSTÈME ET PROCÉDÉ DE RENDU MULTIVOLUME

(43) Date of publication of application: 22.05.2024
(73) Proprietor: Specto Medical AG, 4051 Basel (CH)
(72) Inventor: Faludi, Balázs, 4056 Basel (CH); Zentai, Norbert, 4056 Basel (CH); Zelechowski, Marek, 4056 Basel (CH); Griessen, Mathias, 3600 Thun (CH); Cattin, Philippe, 5210 Windish (CH)
(74) Representative: Bittner, Peter

(56) References cited:
- KATJA SCHWARZ ET AL: "GRAF: Generative Radiance Fields for 3D-Aware Image Synthesis", ARXIV.ORG, CORNELL UNIVERSITY LIBRARY, 201 OLIN LIBRARY CORNELL UNIVERSITY ITHACA, NY 14853, 30 March 2021 (2021-03-30), XP081899920
- NGUYEN-PHUOC THU ET AL: "HoloGAN: Unsupervised Learning of 3D Representations From Natural Images", 2019 IEEE/CVF INTERNATIONAL CONFERENCE ON COMPUTER VISION (ICCV), IEEE, 27 October 2019 (2019-10-27), pages 7587 - 7596, XP033723702, [retrieved on 20200224], DOI: 10.1109/ICCV.2019.00768
- CHAN ERIC R ET AL: "pi-GAN: Periodic Implicit Generative Adversarial Networks for 3D-Aware Image Synthesis", 2021 IEEE/CVF CONFERENCE ON COMPUTER VISION AND PATTERN RECOGNITION (CVPR), IEEE, 20 June 2021 (2021-06-20), pages 5795 - 5805, XP034006813, [retrieved on 20211015], DOI: 10.1109/CVPR46437.2021.00574
- INO F ET AL: "A divided-screenwise hierarchical compositing for sort-last parallel volume rendering", PARALLEL AND DISTRIBUTED PROCESSING SYMPOSIUM, 2003. PROCEEDINGS. INTE RNATIONAL APRIL 22-26, 2003, PISCATAWAY, NJ, USA,IEEE, 22 April 2003 (2003-04-22), pages 14 - 23, XP010645298, ISBN: 978-0-7695-1926-5
- FALUDI B ET AL: "Transfer-function-independent acceleration structure for volume rendering in virtual reality", 2022 7TH INTERNATIONAL CONFERENCE ON INTELLIGENT INFORMATION TECHNOLOGY, ACMPUB27, NEW YORK, NY, USA, 6 July 2021 (2021-07-06), pages 1 - 10, XP058852573, ISBN: 978-1-4503-9658-5, DOI: 10.2312/HPG.20211279

## Description

### Technical Field

The present invention generally relates to rendering images showing three-dimensional scenes, and more particularly, relates to volume rendering with multiple volumes.

### Background

In many software applications, such as medical applications, computer graphics algorithms are used to generate 3D representations of body parts of a patient. Also, in computer games which are performed in virtual 3D sceneries, or in other 3D applications, three-dimensional scenes need to be rendered to images and shown to the human users of the application(s). The rendering of such three-dimensional scenes, in particular in medical applications, is typically performed by using an image-based volume rendering technique which is often referred to as volume ray marching. Ray marching uses volumetric data. Other techniques, such as ray tracing and ray casting compute intersections of rays with surface models of 3D objects. Ray marching does not use such surface models of 3D objects. It only knows cuboid shaped bounding boxes of the volumes and cannot directly compute the intersections of view rays with the surfaces of 3D objects inside a volume. For this reason, ray marching performs small ray marching steps and samples the respective voxels.

In its basic form, a volume ray marching algorithm includes four steps:
- Ray casting. For each pixel of the final image, a ray of sight (view ray) is sent through the volume to be rendered. Typically, the volume corresponds to a simple geometric body (e.g., a cuboid).
- Sampling. Along the part of the view ray that lies within the volume, equidistant sampling points or samples are selected. In general, the volume is not necessarily aligned with the view ray. Therefore, sampling points do not necessarily coincide with the center position of voxels. Because of that, the values of the samples may be interpolated from neighboring voxels.
- Shading. For each sampling point, the sampled value is mapped to an RGBA material color, opacity/transparency, and optionally other properties.
- Combining. All sampling points are combined along the view ray, resulting in the final color value for the pixel that is currently being processed.

A fundamental paper disclosing the concept of ray marching is: Levoy, Marc. "Display of surfaces from volume data." IEEE Computer graphics and Applications 8.3 (1988): 29-37. The paper "A divided-screenwise hierarchical compositing for sort-last parallel volume rendering" by Ino et al., Parallel and Distributed Processing Symposium, 2003. Proceedings. International, April 2003, DOI:10.1109/IPDPS.2003.1213090 discloses a sort-last parallel volume rendering method for distributed memory multiprocessors by merging subimages which are derived from respective subvolumes traversed by the same view ray. This method does not allow for correctly rendering overlapping volumes. The paper "Transfer-Function-Independent Acceleration Structure for Volume Rendering in Virtual Reality" by Faludi et al., Conference: HPG 21: Proceedings of the Conference on High-Performance Graphics, May 2022, DOI:10.2312/hpg.20211279 discloses an empty space skipping technique using an octree that does not have to be recomputed when the transfer function is changed and performs well even when more complex transfer functions are used. Also, this method does not allow for correctly rendering overlapping volumes. With such prior art solutions, it is a challenge to efficiently perform direct multi-volume rendering in particular for three-dimensional scenes with overlapping volumes.

### Summary

There is therefore a need to provide an efficient solution for direct multi-volume rendering for three-dimensional scenes. Direct rendering as used herein means rendering an image directly from raw data. The term will be further explained in the context of different raw data types.

The above problem is solved by embodiments of the invention as claimed by the independent claims: a computer-implemented method for direct multi-volume rendering, a computer program product with instructions configured to cause execution of said method when executing the computer program method, and a computer system which can load and execute said computer program product to execute said method.

The computer system for direct multi-volume rendering is also referred to as MVR system hereinafter. The MVR system comprises functional modules which can perform functions to execute respective steps of the herein disclosed method. Via an appropriate interface, the MVR system receives 3D data specifying a three-dimensional scene. 3D herein means three-dimensional, and 2D means two-dimensional. The 3D scene, as used herein, comprises multiple volumes to be rendered by the MVR system. A typical 3D data set is a series of 2D slice images acquired, for example, by a computed tomography scanner (CT), magnetic resonance imaging (MRI), an X-ray microtomography scanner (MicroCT) or other 3D imaging techniques. The 3D data, as received by the MVR system, correspond to the earlier mentioned raw data. Such discretely sampled 3D data sets are typically called volumes. The 3D scene comprises a plurality of volumes. Thereby, each volume comprises a plurality of voxels. Each voxel of a particular volume has a scalar value being the result of a volumetric imaging procedure for the measurement of a physical property of an imaging subject. Herein, an imaging subject is a physical body which is subject to a volumetric imaging procedure. Examples of imaging subjects include biological samples (e.g., samples from human beings, animals or plants) or non-biological samples (e.g., machine or device components). In other words, the raw data which is used for the direct rendering is the collection of voxels in a volume where each voxel has such a scalar value. Examples of such imaging procedures (imaging techniques) comprise but are not limited to: computer tomography imaging, magnetic resonance imaging, optical coherence tomography imaging, positron emission tomography imaging, single-photon emission computed tomography, and 3D ultrasound imaging, or any image acquisition or generation process resulting in volumetric images. With the appropriate imaging procedure, physical properties can be measured, such as for example, the absorption of X-ray radiation, the number of protons, light transmissivity, positron emission of the injected radiopharmaceuticals, acoustic impedance changes or other physical body properties. A person skilled in the art knows which imaging technique can be used for measuring a respective physical property of an imaging subject.

The MVR system has a multi-ray generator module to generate, at a viewing position, a view multi-ray in the direction of a particular pixel of a projection image. The viewing position typically represents the position of a virtual camera or a virtual reality device used by a user to observe the 3D scene. The projection image is a 2D projection of the 3D scene on which the 3D scene is projected as seen from the viewing projection. The projection image is the image which is shown on a display device, such as monitor. In case when using a virtual reality device for displaying the image, two projection images are generated which are suitable for creating a 3D VR-effect. The projection image is located between the viewing position and the scene. Typically, the projection image is located at a viewing distance in the order of magnitude of 10 cm in front of the viewing position. Thereby, the particular pixel (through which the view multi-ray is sent into the 3D scene) represents a 2D projection of all scene voxels intersecting with the view multi-ray behind the projection image. The view multi-ray represents a plurality of individual view rays with the same starting point and the same direction wherein each individual view ray is associated with one of the volumes in the scene. That is, each individual view ray (also referred to as view ray hereinafter), belongs to exactly one of the volumes loaded into the scene.

The MVR system further has a volume ray marching processor module which uses volume ray marching iterating at each ray marching step over all individual view rays for individually processing each view ray in its associated volume. Individually processing a view ray in its associated volume includes determining color and transparency values in the associated volume at the respective ray marching steps. That is, ray marching steps for a respective view ray are only performed within the associated volume. As a consequence, the number of ray marching steps with a given step length (i.e., the distance between two ray marching steps) for a particular view ray is limited by the boundaries of the associated volume. For example, the first ray marching step of a particular view ray may occur at a multiple of the step length where the particular view ray interacts with the associated volume for the first time. A view ray interacts with its associated volume at the current ray marching step where the view ray intersects with the associated volume for the first time, or when a respective position outside the associated volume is already associated with a visible color value. In some cases, even a ray marching position outside the volume - but very close to the volume - may already result in a visible color value because of voxel interpolation. At each ray marching step, the scalar value of the corresponding voxel is mapped to a color value and a transparency value of said corresponding voxel. In one embodiment, such mapping can be implemented using a predefined transfer function. There can be a different transfer function for each volume (or even for different subregions within a particular volume) dependent on the imaging technology which was used for creating the respective associated volume. For example, in case of a CT scan, the scalar values are measured in Hounsfield units (HU). The respective transfer function may map HU values corresponding to air (black) and soft tissues (gray) to transparent, and HU values corresponding to bone (bright) to white/beige. Typically, the scalar values can be interpreted as greyscale values which are mapped to color values and transparency values (or corresponding opacity values) in accordance with the transfer function. An alternative color mapping approach is disclosed in the detailed description.

A projection image updater module of the MVR system updates the value of the particular pixel in the projection image (the pixel intersecting which the current view multi-ray) by combining the mapped voxel color and transparency values on the individual view rays after each ray marching step. Thereby, the updating with the values of a particular voxel intersecting with a particular view ray is performed after the updating with all intersecting voxel values of voxels closer to the viewing point than the particular voxel, wherein processing non-transparent voxels of overlapping volumes at a same location is performed in sync for the respective individual view rays. In other words, the combining of color/transparency values of voxels with a larger distance to the viewing position has to wait until the combining of color/transparency values of voxels with a shorter distance is completed. As a consequence, a view ray associated with a more distant volume can only be processed in this regard after the processing of view rays associated with less distant volumes is completed. Updating the pixel value may be implemented such that the combined value after each ray marching step is stored in a respective local variable of the system after each ray marching step and the value of this variable is finally written to the particular pixel in the projection image once the ray marching is completed for the corresponding view multi-ray.

The MVR system performs the generating, processing and updating steps for not-yet-updated pixels of the projection image. For example, the described functions may be repeated for all pixels of the projection image in a loop. As the processing of a first view multi-ray does not depend on the processing of a second view multi-ray, it is also possible to process multiple view multi-rays in parallel. For example, in a practical application of the herein disclosed approach, typically hundreds or even thousands of view rays are processed in parallel by a Graphics Processing Unit (GPU). Parallelizing techniques are known in the art, to distribute processing to multiple cores, to pipeline processing etc.

In one embodiment, volume ray marching may use empty-space-skipping in that the individual processing of a particular view ray is accelerated by skipping as many of the ray marching steps inside the associated volume which are associated with fully transparent voxels as possible. Empty-space-skipping approaches using distance maps are disclosed in the following papers:
- Zuiderveld, Karel J., Anton HJ Koning, and Max A. Viergever. "Acceleration of ray-casting using 3-D distance transforms." Visualization in Biomedical Computing'92. Vol. 1808. SPIE, 1992.
- Sramek, Milos. "Fast surface rendering from raster data by voxel traversal using chessboard distance." Proceedings Visualization'94. IEEE, 1994.

In one embodiment, the MVR system may further include a volume registration module to register one or more of the plurality of volumes in relation to each other. Registering a first volume in relation to a second volume means that the origin of the local coordinate system of the first volume is known in the second volume (and vice versa). Once all volumes are correctly registered, the volumes show the same anatomical point in the same location in the global coordinate system. This allows to fix the positions of two or more volumes in relation to each other. For example, the position of a volume showing an MR scan of a human brain of a patient can be fixed in relation to a volume showing a CT scan of the patient's skull such that the visual representation makes anatomic sense.

For performing ray marching, it may be advantageous to convert each view ray, at the start of the respective ray marching process, from a global coordinate system (i.e., the coordinate system associated with the 3D scene) into a local coordinate system of its associated volume (i.e., the coordinate system of the associated volume which is translated, rotated and scaled relative to the global coordinate system). Using such conversion allows to process ray marching steps in the various volumes in the respective local coordinate system simply based on the number of steps performed without the need to compute the respective distances from the viewing position in the global coordinate system for the various volumes. As mentioned, this conversion can be made once at the start of the respective ray marching process and does not need to be repeated with every ray marching step.

In one embodiment, a computer program product is provided for direct multi-volume rendering. The computer program product has computer readable instructions that, when loaded into a memory of a computing device (e.g., the MVR system) and executed by at least one processor of the computing device, cause the computing device to perform the computer-implemented method disclosed herein. Thereby, the functional modules of the MVR system can be implemented as software modules implementing the functions to execute the respective method steps at runtime of the MVR system.

Further aspects of the invention will be realized and attained by means of the elements and combinations particularly depicted in the appended claims. It is to be understood that both the foregoing general description and the following detailed description are exemplary and explanatory only, and are not restrictive of the invention as described.

### Brief Description of the Drawings

FIG. 1A illustrates a view multi-ray used for rendering multiple volumes of a 3D scene in a projection image according to an embodiment;
FIG. 1B illustrates voxels of a volume with a local coordinate system;
FIG. 2 is a simplified block diagram of an MVR system according to an embodiment;
FIG. 3 is a simplified flow chart illustrating a computer-implemented method for direct multi-volume rendering according to an embodiment;
FIGs. 4A to 4D illustrate examples of transfer functions for mapping scalar voxel values to color and transparency values;
FIG. 5 illustrates an example with pixels in a projection image and their respective view multi-rays;
FIG. 6 illustrates an example of ray marching in a volume including a scene object;
FIG. 7 illustrates an example of using a distance map for empty-space skipping; and
FIG. 8 is a diagram that shows an example of a generic computer device and a generic mobile computer device, which may be used in embodiments of the invention.

### Detailed Description

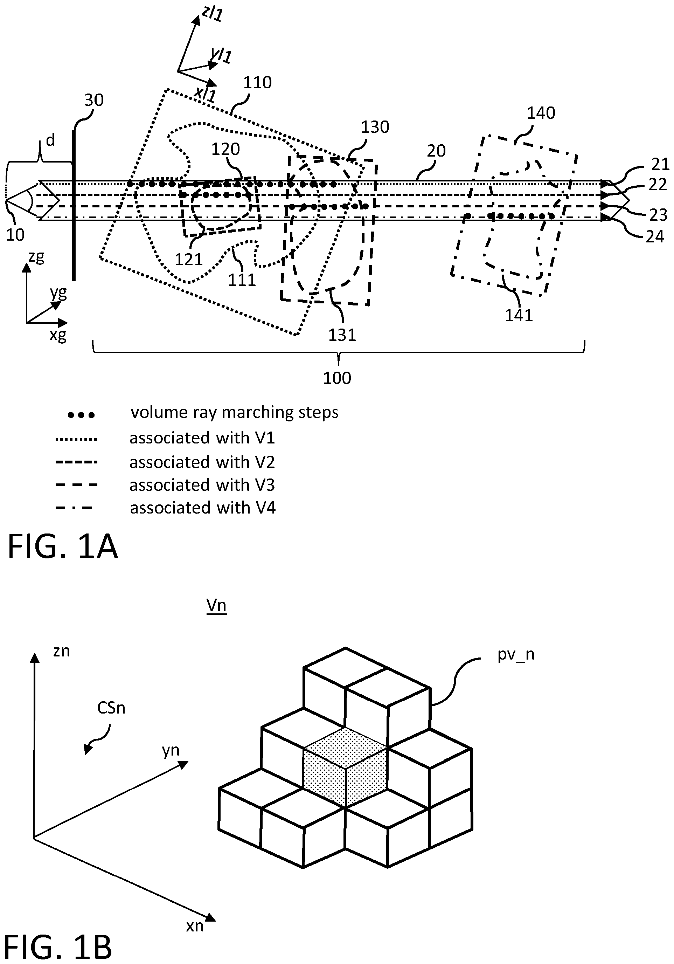

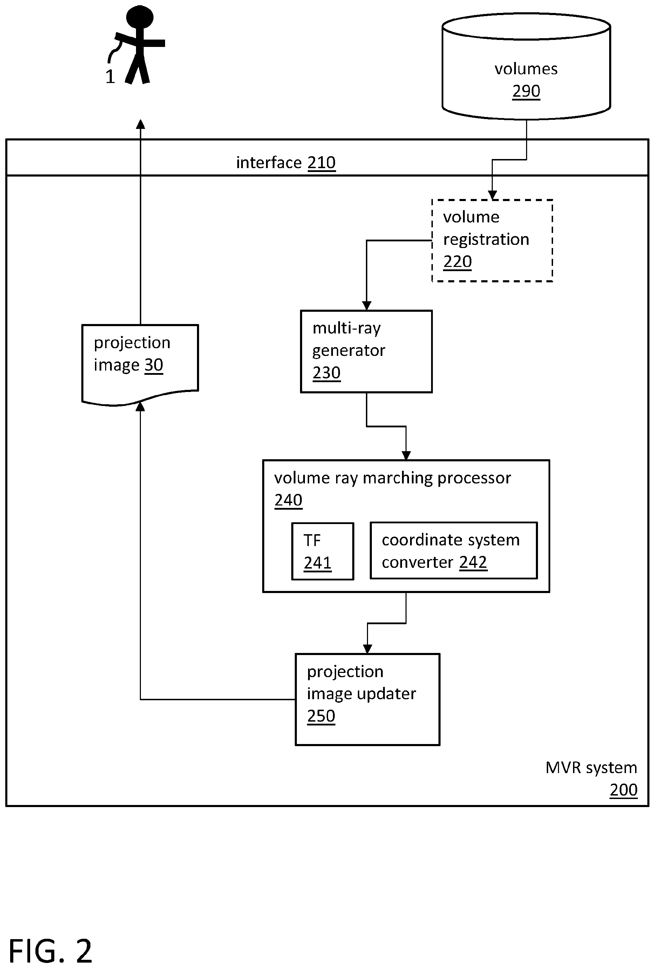

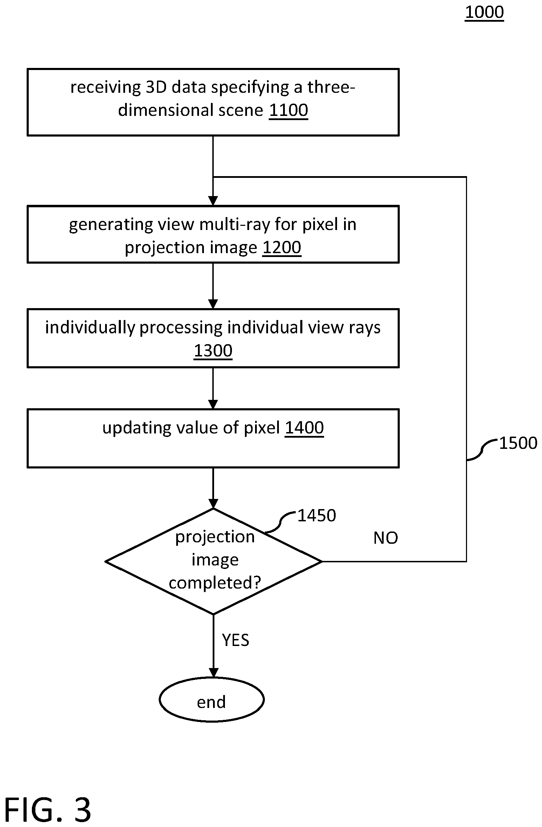

FIG. 1A illustrates a view multi-ray 20 used for direct rendering of multiple volumes 110, 120, 130, 140 of a 3D scene in a projection image 30 according to an embodiment. This figure illustrates the conceptual approach behind the herein disclosed solution. The approach is described in the context of FIG. 2 and FIG. 3. Thereby, FIG. 2 is a simplified block diagram of a computer system 200 (MVR system) which is adapted to implement the MVR approach illustrated in FIG. 1A, and FIG. 3 describes the computer-implemented method 1000 which can be executed by the MVR system 200 at runtime. For this reason, the following part of the description uses the reference numbers referring to such figures.

The MVR system 200 receives 1100 via the interface 210 3D data specifying a three-dimensional scene 100. The skilled person is aware of appropriate interfaces for loading a plurality of volumes 290 into the scene 100. The 3D data specifying respective volumes may be stored in a remote data storage (e.g., in a database on a remote device which is communicatively coupled with system 200). Alternatively, system 200 may include a memory adapted to store the 3D data for the volumes 290. As mentioned earlier, a volume consists of so-called voxels. FIG. 1B illustrates some voxels pv_n of a volume Vn. Voxels of a volume have a cuboid shape. Of course, in the complete volume Vn, each voxel layer has the same number of voxels, typically arranged in a rectangular shape leading to the cuboid shape of the volume. The voxels may have a cubic shape, but in general, the volume Vn is typically composed from layers of 2D images where each pixel of a 2D image is square shaped. In the example, it is assumed that the 2D image layers are located in the xn-yn plane of the local coordinate system CSn of Vn. When looking at the dotted voxel it can be seen that the depth of the voxel in the zn dimension is different from the side (edge) lengths of the voxel in the xn-zn dimensions. The distance at which the 2D image layers are captured (e.g., by any of the earlier mentioned volumetric imaging techniques) corresponds to the depth of the voxels in the zn-dimension. Typically, the depth of a voxel is different from the edge lengths of the respective pixel in the underlying 2D image layers.

In the example of FIG. 1A, MVR system 200 has loaded the four volumes 110 (V1), 120 (V2), 130 (V3), 140 (V4) in the scene 100. For reasons of simplicity the volumes are illustrated as two-dimensional rectangles. However, in a virtual 3D scene, of course the volumes are three-dimensional cuboids. The legend of FIG. 1A illustrates different line styles which are used to distinguish lines associated with a respective volume from lines associated with other volumes. For example, a dotted line style is used for all lines associated with V1. Each volume has its own local coordinate system. For reasons of simplicity, only the local coordinate system xl1-yl1-zl1 of V1 is illustrated in the figure. However, also V2, V3 and V4 have their own local coordinate system, which in general can be translated, rotated and scaled relative to the other local coordinate systems. A person skilled in the art knows how to use matrix multiplications with a transformation matrix for transformations from one coordinate system into another. Each voxel of a particular volume has a scalar value being the result of an imaging procedure for the measurement of a physical property of an imaging subject. In the example, voxels which have scalar values that indicate a certain scene object within the respective volume are located inside the boundaries of said scene objects 111, 121, 131, 141. Similar as the volumes, these three-dimensional scene objects are also illustrated as two-dimensional objects for the reason of simplifying the graphic representation in the figure. Scene objects are defined by visible voxels in the respective volume. Visible objects can be semitransparent or opaque voxels which are to be rendered with corresponding color values. In the example of FIG. 1A, the scene objects may represent tissues and/or organs of a patient which are identified by respective imaging technologies by the respective scalar voxel values in their respective volumes.

In an optional embodiment, the MVR system 200 has a volume registration module 220 which is adapted to register the volumes 290 (e.g., V1 to V4) in relation to each other as already described earlier.

A multi-ray generator 230 of the MVR system 200 generates 1200 a view multi-ray 20 at viewing position 10 as starting point. In FIG. 1, the left edge point of the camera/eye symbol defines the viewing position. The view multi-ray 20 is generated in the direction of a particular pixel of a projection image 30 relative to the viewing position 10. The projection image 30 is in viewing distance d from the viewing position 10 and is located between the viewing position 10 and the scene 100. Finally, the particular pixel represents a 2D projection of all scene voxels intersecting with the view multi-ray behind the projection image 30. In other words, the view multi-ray 20 which intersects with the particular pixel is used for sampling the voxel values of the 3D scene in the direction of the multi-ray to finally compute a combined value reflected in the color value of the particular pixel of the projection image. Thereby, the view multi-ray 20 represents a plurality of individual view rays 21, 22, 23, 24 with the same starting point and the same direction. Each individual view ray is associated with one of the volumes in the scene. In the example, view ray 21 is associated with V1 110, view ray 22 is associated with V2 120, view ray 23 is associated with V3 130, and view ray 24 is associated with V4 140. For reasons of distinctness and better visibility in the drawing, the view rays 21 to 24 are illustrated as parallel arrows. However, they are identical with regard to starting point and direction. That is, their positions in the scene are all identical. Nevertheless, the individual view rays are distinguishable by their unique assignments to one of the volumes. The starting point and direction of the multi-ray 20 (and thereby of the individual view rays) is defined by the multi-ray generator in the global coordinate system xg-yg-zg.

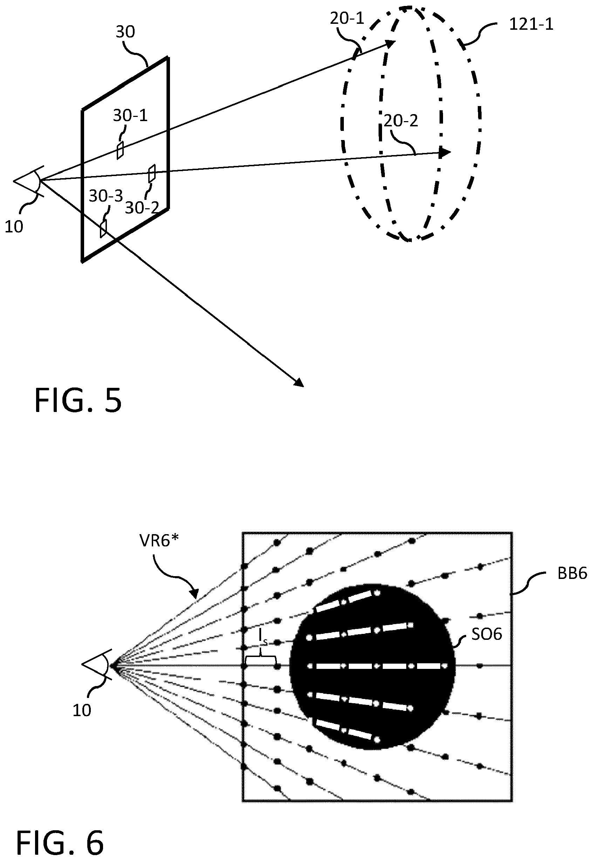

Turning briefly to FIG. 5, the projection image 30 is shown with three further particular pixels 30-1, 30-2, 30-3 through which respectively generated view multi-rays 20-1, 20-2, and 20-3 are sent into the 3D scene for sampling the volume voxels in the scene. In the example of this figure the volumes are not shown. Instead, a 3D scene object 121-1 comprised by one of the volumes is illustrated (as an ellipsoid). In the example, only multi-rays 20-1 and 20-2 intersect with the voxels related to the scene object. Further, one individual view ray of each multi-ray 20-1, 20-2 is associated with the volume that comprises the voxels of scene object 121-1. The final projection image 30 includes 2D projection values for all pixels of the image 30.

A volume ray marching processor 240 of the MVR system 200 individually processes each view ray 21, 22, 23, 24 in its associated volume using volume ray marching. Advantageously, the ray marching may be performed in each volume's local coordinate system for performance optimization. This saves computationally expensive matrix multiplications after each ray marching step. The ray marching steps for a respective view ray are only performed within the associated volume to sample the respective volume voxels. In particular, in the case of overlapping volumes (e.g., V1 overlaps with V2, and V1 overlaps with V3), the corresponding view rays only perform sampling within their associated volumes. In one implementation, the first ray marching step of a particular view ray may occur at a multiple of the ray marching step length where the particular view ray intersects with the associated volume for the first time. In the example of FIG. 1, the first ray marching step of view ray 21 is indicated by the left ray marching dot on view ray 21. The 1^{st} ray marching step of view ray 22 is indicated by the left ray marching dot on view ray 22, and so on. It is to be noted that in regions with overlapping volumes, the ray marching steps for the respective individual view rays are in sync in that they are performed at the same distance to the viewing position 10. In the example, the 1^{st} ray marching step of view ray 22 in V2 occurs at the same distance to the viewing position as the 6^{th} view marching step of view ray 21 in V1. The 2^{nd} ray marching step of view ray 22 occurs at the same distance to the viewing position as the 7^{th} view marching step of view ray 21, and so on. Similarly, the 1^{st} ray marching step of view ray 23 occurs at the same distance to the viewing position as the 16^{th} view marching step of view ray 21, and so on.

In one implementation, at each ray marching step, the scalar value of the corresponding voxel is mapped via a predefined transfer function to a color value and to a transparency value of said corresponding voxel. Optionally, the transfer function may map the potentially interpolated scalar value sampled at the corresponding position also to further parameters, such as luminosity or reflectance properties. The ray marching processor 240 may provide one or more transfer functions TF 241 for the mapping in respective volumes. In the example, view ray 21 is used to process only voxels of V1. A first transfer function TF1 may be used for the voxel value mapping in V1. View ray 22 is used to process only voxels of V2. A second transfer function TF2 may be used for the voxel value mapping in V2. That is, in overlapping volume regions, the mapped voxel values of different volumes at the same distance to the viewing position typically have different mapped voxel values and the individual view rays are capable to compute such volume specific mapped voxel values for their associated volumes at each ray marching step with a respective transfer function.

In an alternative implementation, at each ray marching step, the scalar value of the corresponding voxel (or interpolated position in a volume) is mapped via a predefined transfer function to a transparency value only and the color value is determined by applying an illumination model or a combination of different illumination models. Thereby, the system determines the color and the intensity of light which is reflected by the surface of the scene objects into the direction of the viewing position by taking into account different light sources and material properties of the surface. Details can be found in the Wikipedia article "Bidirectional reflectance distribution function" available at https://en.wikipedia.org/wiki/Bidirectional_reflectance distribution function, or in the overview paper by Montes, Rosana and Carlos Ureña: "An overview of BRDF models." University of Grenada, Technical Report LSI-2012-001 (2012).

The properties to be taken into account depend on the chosen illumination model(s). A classic illumination model is the Blinn-Phong reflection model (cf. Blinn, James F. "Models of light reflection for computer synthesized pictures." Proceedings of the 4th annual conference on Computer graphics and interactive techniques 1977). Another commonly used illumination model is the Lambert model (cf. Lambert, Johann Heinrich. Photometria sive de mensura et gradibus luminis, colorum et umbrae. sumptibus vidvae E. Klett, typis CP Detleffsen, 1760).

The result of this alternative implementation is that the voxel color values are determined by the positions and colors of the light sources and the orientation of the scene object surfaces in relation to the light sources. Surfaces which are oriented towards the light source are colored by the light source whereas the back surfaces stay dark. For example, for relatively simple CT scans the object can be clearly identified.

In a practical implementation, the transfer function approach may be combined with the illumination model approach leading to an improved spatial perception for the observer of the projection image.

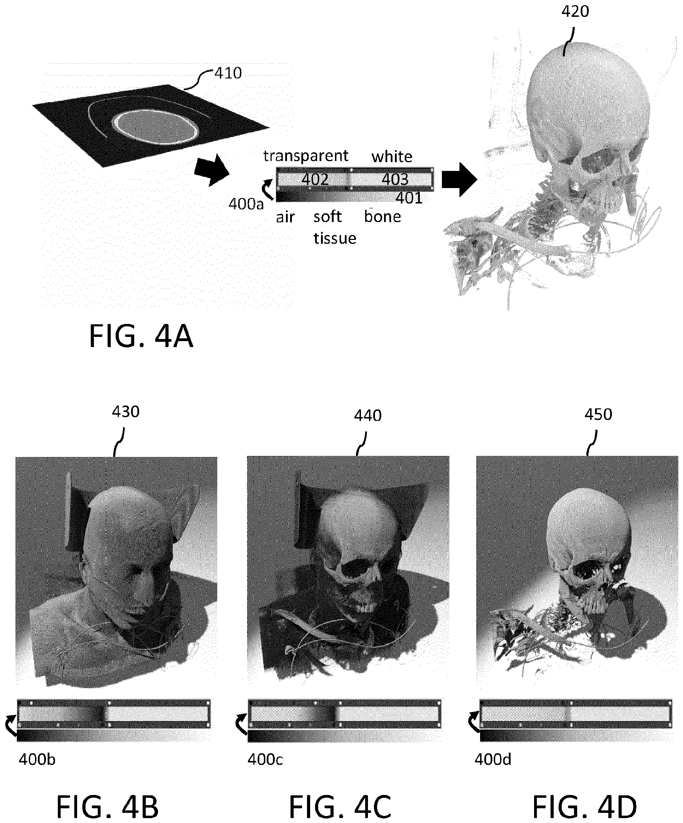

The concept of transfer functions is now described in more detail by using the examples in FIGs. 4A to 4D. In FIG. 4A, a raw CT slice (image) 410 provided by CT scan technology has greyscale pixel values. As a result, the voxels of a CT volume, which is construed by combining multiple layers of raw CT slices, also have corresponding greyscale scalar values (raw data). In the CT volume, the brightness of the voxels corresponds to x-ray absorption of the tissue at the respective body location in Hounsfield units (HU). For producing a realistic 3D rendering of the volume, a transfer function 400a is defined, which maps the grayscale HU values 401 to color and transparency (or opacity) values. In the CT example, the transfer function 400a maps the HU values corresponding to air (black) and soft tissues (gray) to the transparency value 402 "transparent" and maps HU values corresponding to bone (bright) to the color value 403 "white" (or alternatively to "beige"). A direct rendering result 420 based on raw voxel values and the transfer function 400a is illustrated as part of a human skeleton.

FIG. 4D uses a transfer function 400d (similar to transfer function 400a) for generating direct rendering result 450 from a corresponding CT scan raw data volume. FIGs. 4B and 4C illustrate direct rendering results 430, 440 generated from the same CT scan raw data volume using different transfer functions 400b and 400c, respectively. In the figures, the direct rendering results are illustrated in greyscale, but in reality, the transfer functions 400b and 400c map various scalar (greyscale) values to color values corresponding to different hues of red. Defining different transfer functions for mapping the voxel scalar values to corresponding transparency/color values, allows setting different rendering focuses with regard to what kind of physical body properties is to be rendered.

A projection image updater module 250 of the MVR system updates 1400 the value of the particular pixel in the projection image 30 by combining the respective voxel color and transparency values (i.e., the mapped RGBA values of the respective voxels) of the individual view rays. Thereby, updating the respective projection image pixel value with the values of a particular voxel intersecting with a particular view ray is performed after the updating with all intersecting voxel values of voxels closer to the viewing point than the particular voxel.

That is, an individual view ray is allowed to make quick progress until it encounters a non-transparent voxel within its associated volume. However, processing non-transparent voxels has to be done in sync with all rays processing the same location in the 3D scene to achieve correct results for the particular pixel value. The generating 1200, individually processing 1300 and updating 1400 steps are performed 1500 by the respective modules of MVR system 200 for all pixels of the projection image 30. For example, the steps may be repeated in a loop which checks 1450 after each iteration if there are still not-yet-updated pixels of the projection image left. If the projection image is not yet completed, a further loop iteration is started for a not-yet-updated pixel. Once the projection image is completed, the method 1000 ends. Alternatively, multiple pixels of the projection image may be processed in parallel if respective parallel processing is supported by the MVR system 200. As an example, the processing of the individual pixels may be implemented as a shader program executed by a Graphics Processing Unit. Updating the respective projection image pixel value may be advantageously implemented such that the combined values are intermediately stored in a (local) variable during the processing of that projection image pixel. In other words, intermediately storing the combined values in a (local) variable during the processing of a projection image pixel and only updating the respective projection image pixel at the end of said process can improve the performance in some cases. Once the processing of the view multi-ray 20 is completed the final value of that variable is written as the respective projection image pixel value into the projection image 30. Storing the updated projection image pixel values in a local variable during the ray marching process is computationally more efficient than writing the current combined value to the projection image after each ray marching step.

FIG. 6 describes direct volume rendering in more detail by an example. With direct volume rendering (i.e., computing the projection image directly from the volumetric data), the MVR system does not know where visible tissue surfaces (e.g., scene object SO6) are located within a respective volume. Therefore, simple ray-surface collision computations cannot be performed. The direct rendering approach can only determine the collision of a view ray with the bounding box BB6 of a respective volume (e.g., CT volume). Therefore, a plurality of view rays VR6* (one for each pixel of the projection image) is sent from the viewing position 10 through the 3D scene. Within the volume defined by the bounding box BB6 ray marching is performed with each of the view rays. The length of a ray marching step Iₛ (i.e., the distance between two ray marching steps) is in the order of the size of a voxel. For example, the length of a ray marching step may be set to the length of a voxel's diagonal or less. With such tiny steps along the view ray, the raw voxel data is read at each ray marching step location (illustrated by the black and white dots) and the respective transfer function may be applied to determine the color and transparency (or alternatively the opacity, wherein: transparency value = 1- opacity value) for the respective voxel. Typically, the voxel color and transparency values are represented in the so-called RGBA format where the RGB channel represents the color value and the alpha value in the A channel represents the opacity (0%=fully transparent, 100%=fully opaque).

Typically, close to the bounding box BB6, voxels are transparent (e.g., air). Therefore, ray marching can simply continue until the system finds a visible voxel. Typically, when a view ray intersects with a visible voxel (e.g., bones or soft tissue), the projection image updater starts accumulating the color and transparency of visible voxel with subsequent visible voxels. In other words, the color and transparency values of visible voxels along the view ray are combined into a color value of the respective pixel in the projection image. This accumulation continues until the opacity channel (alpha value in RGBA) of the current pixel reaches a threshold close to 100%. For example, the opacity threshold may be predefined in the range between 90% and 99,9%. As a consequence, anything that the view ray might encounter from that point on, will not be visible anyway because it would be hidden by the previously intersected voxels. That is, the ray marching process can be stopped at this point. This effect is often referred to as early ray termination. In the example of FIG. 6, the black dots represent ray marching steps where the view ray intersects with invisible voxels. The white dots illustrate ray marching steps where the view ray intersects with visible voxels belonging to the scene object 506. For each white dot, the above-described accumulation (combining) of the mapped voxel values is performed. In the example, all view rays penetrating the scene object SO6 continue with ray marching steps behind the object. That is, early ray termination was not active or none of the illustrated rays reached the opacity threshold for early ray termination.

In the following, a detailed example is described in view of FIG. 1A without the intention to limit the scope of the claims in any way. In particular when combining mapped voxel values in regions with overlapping volumes the combining is always performed in the order that the voxels closest to the viewing position are combined first. Advantageously, the individual view rays are processed "in lockstep". That is, the processing for the view rays (in particular in overlapping volume regions) progresses at exactly the same speed and in the same direction.

Initially, with the generation of the view multi-ray 20, the view rays 21 to 24 are initialized. Then, the MVR system determines the position for the first ray marching step for each (individual) view ray in the respective associated volume. In the example, it is assumed that the first ray marching step:
- in V1 occurs at 8 step lengths (position '8') from the viewing position 10,
- in V2 occurs at 13 step lengths (position '13') from the viewing position 10,
- in V3 occurs at 23 step lengths (position '23') from the viewing position 10, and
- in V4 occurs at 29 step lengths (position '39') from the viewing position 10.

These first ray marching step positions in each volume may be stored as the number of step lengths from the viewing position for the respective view rays. The minimum value of these first ray marching step positions is the view multi-ray distance from the viewing position (referred to as multi-ray position). That is, in the example the system knows that all view rays have a first ray marching step position which has at least a distance of 8 step lengths from the viewing position. The multi-ray position is then incremented by '1' after completion of each ray marching step. With this information, the MVR system can decide, at any time, whether the mapped voxel values on a particular view ray can be combined without risk or whether the system still has to wait with combining because there is a risk that a mapped voxel which is closer to the viewing position may be opaque and would hide all voxels at a greater distance from the viewing position, or may have a non-transparent color value which has to be combined first to achieve a correct final pixel color. Also, in the case of semi-transparent pixels, the order in which the voxel values are combined is relevant to arrive at the correct pixel color.

The volume ray marching processor iterates at each ray marching step over all view rays 21 to 24 (i.e., over all volumes V1 to V4 to be rendered to the projection image). The order of this iteration is irrelevant. In the following the iteration order V2 → V1 → V4 → V3 is assumed. In the below described example, in cases where multiple iterations are described under a single headline, it is to be understood that in each iteration all volumes are processed in the above iteration order before the system performs the next iteration.

In an optional embodiment, the MVR system may store a distance map which can be computed during the loading process of a volume. During this loading process, and given one or more transfer functions, the system may compute, for each voxel of each volume the distance to the closest visible voxel in said volume and store the computed distances in the distance map. During the volume ray marching, the ray marching processor of the MVR system can retrieve from the distance map, at each position in a respective volume, the distance to the next visible voxel to determine whether the next ray marching step can be performed at a multiple of the step length (ray marching jump). Once such distance is smaller than or equal to the ray marching step length, the scalar data of the respective voxel is read and processed with the corresponding transfer function. The distance map allows to skip transparent voxels in a volume during ray marching, thus speeding up the ray marching processing.

### 1^{st} iteration

V2: view ray 22 starts with the first ray marching step at position '13'. When reading the distance map, the system recognizes that a visible voxel is close and no ray marching jump can be performed. After reading the scalar voxel value and applying the transfer function, the ray marching processor determines that the voxel is transparent and therefore no combination of mapped color/transparency values is necessary. As a result, view ray 22 moves to the next ray marching step at position '14'.

V1: for view ray 21 the situation is similar to view ray 22. View ray 22 moves to the next ray marching step at position '9'.

V4: for view ray 24, at the edge of V4, the system derives from the distance map that all voxels within a radius of two step lengths are transparent. Therefore, the position of the view ray 24 can be safely increased from '39' to '41'.

V3: for view ray 23 the situation is similar to view rays 22 and 21 and the position can be incremented by one to position '24'.

After having iterated over all view rays, the multi-ray position is increased by one from '8' to '9' for the next iteration. As after the 1^{st} iteration the ray marching step positions of all view rays for the 2^{nd} iteration are already inside respective scene objects, no further ray marching jumps are allowed (as long as the respective view ray is inside a scene object) because the respective distance values in the distance map are '0'.

### 2^{nd} iteration

Starting again with V2, at the current position '14' of view ray 22, the ray marching processor read the first visible voxel of V2 belonging to the scene object 121. However, the current position of '14' of view ray 22 is further away from the viewing position than the current multi-ray position '9'. Therefore, the respective mapped voxel values at the current position '14' must not be combined yet for the respective pixel in the projection image. View ray 22 at the current position has to wait until the multi-ray position reaches '14', too.

V1: view ray 21 has reached a visible voxel at current position '9' belonging to scene object 111. The respective mapped voxel values are determined using the respective transfer function and combined with the respective projection image pixel because there are no other view rays with current positions closer to the viewing position. The current position of view ray 21 is increase to position '10'.

V4: the current position '41' of view ray 24 still intersects with a transparent voxel (→ no combination of mapped values). The distance map indicates that no further ray marching jumps are possible. Therefore, the current position is increased to position '42'.

V3: view ray 23 has reached a visible voxel at current position '24' belonging to scene object 131. The respective mapped voxel values are determined using the respective transfer function. However, similar as for view ray 22, the respective mapped voxel values at the current position '24' must not be combined yet for the respective pixel in the projection image. View ray 23 at the current position has to wait until the multi-ray position reaches '24', too. That is, the volumes V1 and V2 which are closer to the viewing position have to be processed up to position '24' before the mapped voxel values of view ray 23 can be combined with the projection image pixel value.

After all view rays have been processed in the second iteration the multi-ray position is incremented to '10'.

### 3^{rd}, 4^{th} and 5^{th} iteration

V2: at its current position '14', view ray 22 has to wait.

V1: view ray 21 has reaches three further visible voxels at current positions '11', '12' and '13' belonging to scene object 111. The respective mapped voxel values are determined at each position using the respective transfer function and combined with the respective projection image pixel after the respective ray marching step because there are no other view rays with current positions closer to the viewing position. The current position of view ray 21 is increased to position '14' in the fifth iteration. Although position '14' already overlaps with V2 and would allow for combining, no combination with V2 voxel values occurs as the voxel intersecting with view ray 22 was transparent.

V4: at its current position '42', view ray 24 has to wait.

V3: at its current position '24', view ray 23 has to wait.

After all view rays have been processed in the third, fourth and fifth iteration, the multi-ray position is at '14'.

### 6^{th} iteration to 11^{th} iteration

In the sixth iteration, view ray 21 has reached the current position of view ray 22. Both view rays have now the same distance from the viewing position. Therefore, for V2 and V1, the respective mapped voxel values are determined at the ray marching step positions '14' to '19' (the last position of view ray 22 intersecting with scene object 121) and combined in the respective image projection pixel value. In the 11^{th} iteration the current positions of view ray 21 and 22 are incremented to position '20'. Position '20' is already outside of V2. That is, the ray marching processor does not consider view ray 22 any more for the further processing.

V4 and V3: View rays 24 and 23 are still waiting.

After all view rays have been processed in the 11^{th} iteration the multi-ray position is incremented to '20'.

### 12^{th} iteration to 14^{th} iteration

V1: At positions '20' to '22', only view ray 21 intersects with visible pixels of its associated volume (scene object 111). Therefore, the respective mapped voxel values are combined with the respective image projection pixel. The current position of view ray 21 is incremented to position '23' in the 14^{th} iteration.

V4 and V3: View rays 24 and 23 are still waiting.

After all view rays have been processed in the 14^{th} iteration the multi-ray position is incremented to '23'.

### 15^{th} iteration

V1: view ray 21 is now at position '23' still intersecting with a visible voxel of scene object 111. Although, at position '23', V1 overlaps with V3, only the mapped voxel values of view ray 21 are combined with the pixels value because the voxel in V2 at position '23' is invisible and view ray 23 has already progressed to position 24 (while the multi-ray position is still at position 23). The current position of view ray 21 is incremented to '24'.

View rays 23, 24 are still waiting.

The multi-ray position is incremented to '24'.

### 16^{th} iteration and 17^{th} iteration

V1: In the 16^{th} and 17^{th} iteration view ray 21 reaches positions '24' and '25' which are still intersecting with visible voxels of V1. Therefore, the respective mapped voxel values of scene object 111 are combined with the respective projection image pixel. The current position of view ray 21 is set to '26' at the end of the 17^{th} iteration.

V4: view ray 24 is still waiting.

V3: the current position of view ray 23 equals the multi-ray position '24' at the beginning of the 16^{th} iteration. Therefore, the mapped voxel values of view ray 23 can now be combined with the respective projection image pixel because no other voxels closer to the viewing position could hide the visible voxel of scene object 131. The current position of view ray 23 is increased to '25' and the same processing continues for the visible voxel at this position. The current position of view ray 23 is set to '26' at the end of the 17^{th} iteration.

The multi-ray position is also set to '26' at the end of the 17^{th} iteration.

### 18^{th} iteration to 21^{st} iteration

V1: from position '26' onwards, the remaining voxels inside V1 intersected by view ray 21 are all invisible (to the right of scene object 111). Therefore, no combination of mapped voxel values is required anymore. The current position at the end of the 21^{st} iteration is incremented to '29' which is outside V1. Therefore, view ray 21 is not considered any more for further ray marching processing after the 21^{st} iteration. The example illustrates the situation when using ray marching jumps. In this empty-space skipping implementation, already the ray marching step which would occur at position '28' is skipped.

V4: view ray 24 is still waiting.

V3: the corresponding voxels on view ray 23 are visible voxels of scene object 131. Therefore, the respective mapped voxel values are combined with the respective projection image pixel. The current position of view ray 23 at the end of the 21^{st} iteration is set to '29'.

The multi-ray position at the end of the 21^{st} iteration is set to '29'.

### 22^{nd} iteration

V4: view ray 24 is still waiting.

V3: view ray 23 is at the last visible voxel of scene object 131. Hence the mapped voxel values are combined and the current position is incremented to '30'.

The multi-ray position is set to '30'.

### 23^{rd} iteration

V4: view ray 24 is still waiting.

V3: at position '30', view ray 23 intersects with the last (invisible) voxel of V3. Hence, no values are combined with the projection image pixel. The current position is incremented to '31' which is outside of V3. Therefore, V3 is not considered any more by the ray marching processor.

The multi-ray position is set to '30'. Alternatively, when leaving a volume, the multi-ray position can be updated with the minimum of the view ray positions of the still-to-be-processed volumes which in the current example is the current position '42' of view ray 24.

### 24^{th} iteration

V4: V4 is now the only volume which remains for ray marching. Although the multi-ray position '30' is still closer to the viewing position than the current position '42' of view ray 24, the ray marching processor can now continue with processing view ray 24 as the processing of all volumes closer to the viewing position has been completed. Therefore, the current multi-ray position from now on corresponds to the current position of view ray 24. The voxel in V4 at position '42' is the first visible voxel of scene object 141. Hence, combining is to be performed and the current position of view ray 24 is incremented to '43'.

### 25^{th} to 29^{th} iteration

V4: at positions '43' to '47', view ray 24 intersects with visible voxels belonging to scene object 141. The respective mapped voxel values are combined with the projection image pixel after each ray marching step of view ray 24. The current position is incremented to '48' at the end of the 29^{th} iteration.

At position '48' the last voxel in volume V4 is already an invisible voxel outside scene object 141 and no combining occurs. Hence, the ray marching process for the entire multi-ray 20 has been successfully completed and all mapped voxel values of the volumes V1 to V4 have been combined with the respective projection image pixel in the correct order to ensure that voxels at a greater distance from the viewing position cannot wrongly affect the projection image pixel value in case where they would be hidden by voxels closer to the viewing position. Nevertheless, the processing of the individual view arrays allows the efficient processing of 3D scenes with a plurality of volumes in particular in scenes with overlapping volumes. Of course, the herein disclosed multi-volume rendering approach equally works for non-overlapping volumes (e.g., two volumes side by side). In this case, the volumes can be rendered one after the other, starting with the volume farthest away from the viewing position, and using standard alpha compositing to get the final image. This works, because at every point in the 3D scene, only one of the volumes is present to influence the color of a view ray passing through that part of the 3D scene. However, with overlapping volumes having semitransparent overlapping scene objects, a simple volume-by-volume approach does not work anymore. Instead, the above-described multi-ray approach can be used to render all volumes of the 3D scene in one go, thus solving this problem. Further, the decoupling of individual view rays for the associated volumes allows faster rendering of some more complex cases, where the view rays may have to slow down in different regions of the scene. Typical reasons for rays to slow down (i.e., not being able to make bigger steps by using, for example, empty space skipping) are noisy areas in the volume (e.g., due to low-quality images or lots of tiny structures), or when view rays traverse close to visible voxel structures without actually passing through anything visible.

In particular in medical applications, multiple volumes with different sources of the 3D data may be overlayed with each other in a 3D scene. For example, a CT volume and an MRI volume may be overlayed in a 3D scene such that the volumes overlap. This is typically the case when the respective scans are directed to the same portion of a patient's body (e.g., the patient's head or chest). CT generally generates higher resolution images with no geometric distortion which is well suited to visualize bones. But certain other tissues or pathologies are not well visible using CT data. To close this gap, an MRI volume may be generated in addition to the CT volume. For example, the MRI volume can capture a tumor and can be co-registered to the CT volume, so that it appears at the right location, relative to the bones. In a further use case, a pre-operative and a post-operative CT can be rendered side-by-side, to evaluate the surgical result. In a still further use case, a single CT volume may be separated into multiple small volumes so that each small volume comprises one or more of the scene objects in the original CT volume. The scene object(s) of one small volume can then be individually moved in relation to the scene objects of the other small volumes. This can be used for example to test the correction of a bone fracture by re-arranging the bones (i.e., by rearranging the small volumes which included the bone fractions as scene objects).

Standard empty-space-skipping techniques (e.g., Euclidean distance map, min-max octree) can be used to speed up the view rays in empty regions of the volumes. Empty-space skipping is applied to each individual view ray. This means, that the view rays for different associated volumes (for the same projection image pixel) may get out-of-sync and some view rays may be further ahead than others. It has been described above, how this issue is handled by making sure that visible voxels which are closer to the viewing position are processed before visible voxels at a greater distance. With empty-space skipping, a performance optimization can be achieved by using extra information to skip as much of the invisible areas of a respective volume as possible (e.g., typically the invisible voxels representing air). Empty-space skipping techniques are known in the art. However, in the herein disclosed approach, empty-space skipping is independently applied to each individual view ray of a view multi-ray.

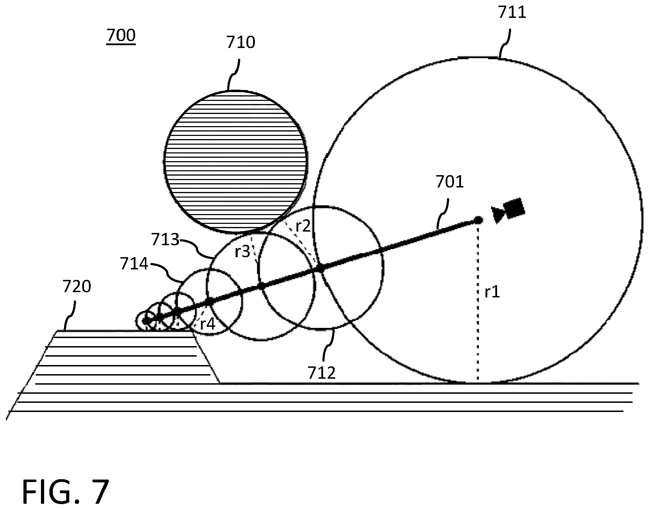

One possible approach for empty-space skipping is to do some precomputation on the 3D data while loading it for the first time into the scene. For every single voxel in a particular volume, the distance to the nearest non-transparent voxel can be precomputed. In other words, the system determines the radius of the biggest sphere which can be placed at the location which only contains invisible voxels. This data structure is called a distance map. FIG. 7 illustrates two visible scene objects 710, 720 in a volume 700. The camera at the center of sphere 711 represents the viewing position. View ray 701 illustrates a ray, corresponding to a single pixel in the projection image, passing through the volume. As described earlier, in one embodiment of the raymarching process, the distance map can be used at every ray marching step to determine if a bigger ray marching jump is possible to skip empty areas of the volume 700, while being sure that no visible voxels are skipped. The first ray marching step is positioned at the center of sphere 711 at the viewing distance in front of the camera. The value stored in the precomputed distance map at this position is the length of the dashed line r1, which is the radius of the biggest sphere that can be placed at this location without containing any visible voxels. The closest visible voxel to the center of sphere 711 is part of scene object 720 and is located at the intersection of the dashed line r1 and the sphere 711. Therefore, at the first ray marching step, a jump can be made equal to the length of r1 along view ray 701 and end up at the center of sphere 712. At step 2, the value read from the distance map is the length of the dashed line r2, which corresponds to the distance of the center of sphere 712 and the closest visible voxel (part of scene object 710). Therefore, at step 2, a jump equal to the length of r2 can be made. This process is repeated until a value is read from the distance map, which does not warrant an empty space jump. This is usually a distance less than or equal to the ray marching step size. In the illustrated example, the process is repeated for sphere 713 with radius r3, sphere 714 with radius r4 and 3 additional smaller spheres. At the last illustrated position along the view ray 701, the distance to the nearest visible voxel (part of scene object 720) is too small to make an empty space jump. Therefore, at this point, the ray marching process falls back to the default implementation without empty-space skipping as described in the previous sections. It is to be noted that with empty-space skipping, the distance map is always read before falling back to the default implementation. Therefore, it is possible for empty-space jumps to happen in disjointed segments along the view ray. For example, the view ray could pass through a semi-transparent scene object, in which case, empty space skipping can be used both before the after passing through the scene object, but not while traversing though it.

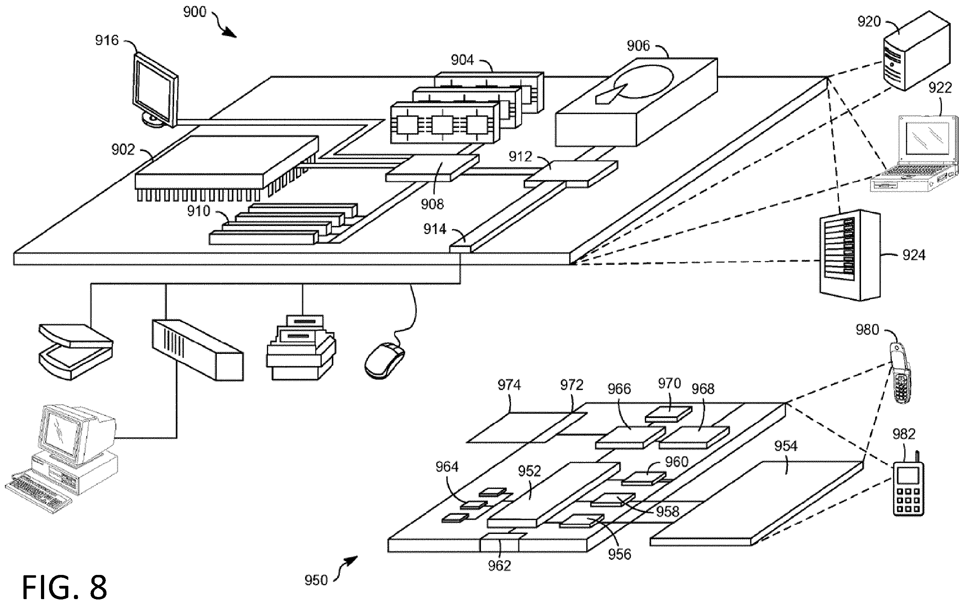

FIG. 8 is a diagram that shows an example of a generic computer device 900 and a generic mobile computer device 950, which may be used with the techniques described here. Computing device 900 relates in an exemplary embodiment to the MVR system 200 (cf. FIG. 2). Computing device 950 is intended to represent various forms of mobile devices, such as personal digital assistants, cellular telephones, smart phones, and other similar computing devices such as virtual reality glasses. Computing device 950 may be used for displaying the projection image as a result of the direct multi-volume rendering to a user. In the case of the user using a virtual reality display device, two projection images are rendered which reflect the different viewing angles of the user's eyes. The components shown here, their connections and relationships, and their functions, are meant to be exemplary only, and are not meant to limit implementations of the inventions described and/or claimed in this document.

Computing device 900 includes a processor 902, memory 904, a storage device 906, a high-speed interface 908 connecting to memory 904 and high-speed expansion ports 910, and a low-speed interface 912 connecting to low-speed bus 914 and storage device 906. Each of the components 902, 904, 906, 908, 910, and 912, are interconnected using various busses, and may be mounted on a common motherboard or in other manners as appropriate. The processor 902 can process instructions for execution within the computing device 900, including instructions stored in the memory 904 or on the storage device 906 to display graphical information for a GUI on an external input/output device, such as display 916 coupled to high-speed interface 908. In other implementations, multiple processors and/or multiple buses may be used, as appropriate, along with multiple memories and types of memory. Also, multiple computing devices 900 may be connected, with each device providing portions of the necessary operations (e.g., as a server bank, a group of blade servers, or a multi-processor system).

The memory 904 stores information within the computing device 900. In one implementation, the memory 904 is a volatile memory unit or units. In another implementation, the memory 904 is a non-volatile memory unit or units. The memory 904 may also be another form of computer-readable medium, such as a magnetic or optical disk.

The storage device 906 is capable of providing mass storage for the computing device 900. In one implementation, the storage device 906 may be or contain a computer-readable medium, such as a floppy disk device, a hard disk device, an optical disk device, or a tape device, a flash memory or other similar solid state memory device, or an array of devices, including devices in a storage area network or other configurations. A computer program product can be tangibly embodied in an information carrier. The computer program product may also contain instructions that, when executed, perform one or more methods, such as those described above. The information carrier is a computer- or machine-readable medium, such as the memory 904, the storage device 906, or memory on processor 902.

The high-speed controller 908 manages bandwidth-intensive operations for the computing device 900, while the low-speed controller 912 manages lower bandwidth-intensive operations. Such allocation of functions is exemplary only. In one implementation, the high-speed controller 908 is coupled to memory 904, display 916 (e.g., through a graphics processor or accelerator), and to high-speed expansion ports 910, which may accept various expansion cards (not shown). In the implementation, low-speed controller 912 is coupled to storage device 906 and low-speed expansion port 914. The low-speed expansion port, which may include various communication ports (e.g., USB, Bluetooth, ZigBee, WLAN, Ethernet, wireless Ethernet) may be coupled to one or more input/output devices, such as a keyboard, a pointing device, a scanner, or a networking device such as a switch or router, e.g., through a network adapter.

The computing device 900 may be implemented in a number of different forms, as shown in the figure. For example, it may be implemented as a standard server 920, or multiple times in a group of such servers. It may also be implemented as part of a rack server system 924. In addition, it may be implemented in a personal computer such as a laptop computer 922. Alternatively, components from computing device 900 may be combined with other components in a mobile device (not shown), such as device 950. Each of such devices may contain one or more of computing device 900, 950, and an entire system may be made up of multiple computing devices 900, 950 communicating with each other.

Computing device 950 includes a processor 952, memory 964, an input/output device such as a display 954, a communication interface 966, and a transceiver 968, among other components. The device 950 may also be provided with a storage device, such as a microdrive or other device, to provide additional storage. Each of the components 950, 952, 964, 954, 966, and 968, are interconnected using various buses, and several of the components may be mounted on a common motherboard or in other manners as appropriate.

The processor 952 can execute instructions within the computing device 950, including instructions stored in the memory 964. The processor may be implemented as a chipset of chips that include separate and multiple analog and digital processors. The processor may provide, for example, for coordination of the other components of the device 950, such as control of user interfaces, applications run by device 950, and wireless communication by device 950.

Processor 952 may communicate with a user through control interface 958 and display interface 956 coupled to a display 954. The display 954 may be, for example, a TFT LCD (Thin-Film-Transistor Liquid Crystal Display) or an OLED (Organic Light Emitting Diode) display, or other appropriate display technology. The display interface 956 may comprise appropriate circuitry for driving the display 954 to present graphical and other information to a user. The control interface 958 may receive commands from a user and convert them for submission to the processor 952. In addition, an external interface 962 may be provide in communication with processor 952, so as to enable near area communication of device 950 with other devices. External interface 962 may provide, for example, for wired communication in some implementations, or for wireless communication in other implementations, and multiple interfaces may also be used.

The memory 964 stores information within the computing device 950. The memory 964 can be implemented as one or more of a computer-readable medium or media, a volatile memory unit or units, or a non-volatile memory unit or units. Expansion memory 984 may also be provided and connected to device 950 through expansion interface 982, which may include, for example, a SIMM (Single In Line Memory Module) card interface. Such expansion memory 984 may provide extra storage space for device 950, or may also store applications or other information for device 950. Specifically, expansion memory 984 may include instructions to carry out or supplement the processes described above, and may include secure information also. Thus, for example, expansion memory 984 may act as a security module for device 950, and may be programmed with instructions that permit secure use of device 950. In addition, secure applications may be provided via the SIMM cards, along with additional information, such as placing the identifying information on the SIMM card in a non-hackable manner.

The memory may include, for example, flash memory and/or NVRAM memory, as discussed below. In one implementation, a computer program product is tangibly embodied in an information carrier. The computer program product contains instructions that, when executed, perform one or more methods, such as those described above. The information carrier is a computer- or machine-readable medium, such as the memory 964, expansion memory 984, or memory on processor 952, that may be received, for example, over transceiver 968 or external interface 962.

Device 950 may communicate wirelessly through communication interface 966, which may include digital signal processing circuitry where necessary. Communication interface 966 may provide for communications under various modes or protocols, such as GSM voice calls, SMS, EMS, or MMS messaging, CDMA, TDMA, PDC, WCDMA, CDMA2000, or GPRS, among others. Such communication may occur, for example, through radio-frequency transceiver 968. In addition, short-range communication may occur, such as using a Bluetooth, WiFi, ZigBee or other such transceiver (not shown). In addition, GPS (Global Positioning System) receiver module 980 may provide additional navigation- and location-related wireless data to device 950, which may be used as appropriate by applications running on device 950.

Device 950 may also communicate audibly using audio codec 960, which may receive spoken information from a user and convert it to usable digital information. Audio codec 960 may likewise generate audible sound for a user, such as through a speaker, e.g., in a handset of device 950. Such sound may include sound from voice telephone calls, may include recorded sound (e.g., voice messages, music files, etc.) and may also include sound generated by applications operating on device 950.

The computing device 950 may be implemented in a number of different forms, as shown in the figure. For example, it may be implemented as a cellular telephone 980. It may also be implemented as part of a smart phone 982, personal digital assistant, or other similar mobile device.

Various implementations of the systems and techniques described here can be realized in digital electronic circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the terms "machine-readable medium" "computer-readable medium" refers to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the systems and techniques described here can be implemented on a computer having a display device (e.g., a CRT (cathode ray tube) or LCD (liquid crystal display) monitor) for displaying information to the user and a keyboard and a pointing device (e.g., a mouse or a trackball) by which the user can provide input to the computer. Other kinds of devices can be used to provide for interaction with a user as well; for example, feedback provided to the user can be any form of sensory feedback (e.g., visual feedback, auditory feedback, or tactile feedback); and input from the user can be received in any form, including acoustic, speech, or tactile input.

The systems and techniques described here can be implemented in a computing device that includes a back end component (e.g., as a data server), or that includes a middleware component (e.g., an application server), or that includes a front end component (e.g., a client computer having a graphical user interface or a Web browser through which a user can interact with an implementation of the systems and techniques described here), or any combination of such back end, middleware, or front end components. The components of the system can be interconnected by any form or medium of digital data communication (e.g., a communication network). Examples of communication networks include a local area network ("LAN"), a wide area network ("WAN"), and the Internet.

The computing device can include clients and servers. A client and server are generally remote from each other and typically interact through a communication network. The relationship of client and server arises by virtue of computer programs running on the respective computers and having a client-server relationship to each other.

In addition, the logic flows depicted in the figures do not require the particular order shown, or sequential order, to achieve desirable results. In addition, other steps may be provided, or steps may be eliminated, from the described flows, and other components may be added to, or removed from, the described systems.

## Claims

1. A computer-implemented method (1000) for direct multi-volume rendering, the method comprising:
receiving (1100) 3D data specifying a three-dimensional scene (100) comprising a plurality of volumes (110, 120, 130, 140) wherein each volume comprises a plurality of voxels (pv_n), wherein each voxel of a particular volume has a scalar value being the result of an imaging procedure for the measurement of a physical property of an imaging subject;
generating (1200), at a viewing position (10), a view multi-ray (20) in the direction of a particular pixel of a projection image (30), the projection image being located between the viewing position (10) and the scene (100), wherein the particular pixel has a value representing a projection of all scene voxels intersecting with the view multi-ray behind the projection image (30), the view multi-ray (20) representing a plurality of individual view rays (21, 22, 23, 24) with the same starting point and the same direction wherein each individual view ray is associated with one of the volumes (110, 120, 130, 140) in the scene (100);
using volume ray marching iterating at each ray marching step over all individual view rays for individually processing (1300) each view ray (21, 22, 23, 24) in its associated volume wherein ray marching steps for a respective view ray are only performed within the associated volume and, at each ray marching step, the scalar value of the corresponding voxel is mapped to a color value and a transparency value of said corresponding voxel;
updating (1400) the value of the particular pixel in the projection image (30) by combining the respective voxel color and transparency values of the individual view rays after each ray marching step, wherein updating with the values of a particular voxel intersecting with a particular view ray is performed after the updating with all intersecting voxel values of voxels closer to the viewing point than the particular voxel, wherein processing non-transparent voxels of overlapping volumes at a same location is performed in sync for the respective individual view rays; and
performing (1500) the generating (1200), processing (1300) and updating (1400) steps for not-yet-updated pixels of the projection image (30).

2. The method of claim 1, wherein volume ray marching uses empty-space-skipping in that the individual processing of a particular view ray skips ray marching steps inside the associated volume which are associated with fully transparent voxels.

3. The method of any of the previous claims, wherein the imaging procedure is an image acquisition or image generation process resulting in volumetric images.

4. The method of any of the previous claims, wherein the imaging procedure is selected from any of: computer tomography imaging, magnetic resonance imaging, optical coherence tomography imaging, positron emission tomography imaging, single-photon emission computed tomography, and 3D ultrasound imaging.

5. The method of any of the claims 1 to 4, wherein the physical property is selected from: the absorption of X-ray radiation, the number of protons, light transmissivity, positron emission of injected radiopharmaceuticals, and acoustic impedance.

6. The method of any of the previous claims, wherein two or more of the plurality of volumes are registered in relation to each other, wherein the origin of the local coordinate system of a first volume is known in a second volume, and vice versa.

7. The method of any of the previous claims, wherein at the start of the ray marching process for each view ray, the respective view ray is converted from a global coordinate system (xg, yg, zg) into a local coordinate system (xn, yn, zn) of its associated volume (110, 120, 130, 140).

8. The method of any of the previous claims, wherein individually processing (1300) a first view ray (21) uses a first predefined transfer function for mapping scalar values of voxels of the respective associated volume (110) to respective color values and a transparency values, and individually processing (1300) a second view ray (22) uses a second predefined transfer function for mapping scalar values of voxels of the respective associated volume (120) to respective color values and a transparency values.

9. A computer program product for direct multi-volume rendering, the computer program product comprising computer readable instructions that, when loaded into a memory of a computing device and executed by at least one processor of the computing device, cause the computing device to perform the method according to any one of the previous claims.

10. A computer system (200) for direct multi-volume rendering, comprising:
an interface (210) adapted to receive 3D data specifying a three-dimensional scene (100) comprising a plurality of volumes (290) wherein each volume comprises a plurality of voxels (pv_n), wherein each voxel of a particular volume has a scalar value being the result of an imaging procedure for the measurement of a physical property of an imaging subject;
a multi-ray generator (230) configured to generate, at a viewing position (10), a view multi-ray (20) in the direction of a particular pixel of a projection image, (30), the projection image being located between the viewing position (20) and the scene (100), wherein the particular pixel has a value representing a projection of all scene voxels intersecting with the view multi-ray behind the projection image (30), the view multi-ray (20) representing a plurality of individual view rays (21, 22, 23, 24) with the same starting point and the same direction wherein each individual view ray is associated with one of the volumes (110, 120, 130, 140) in the scene (100);
a volume ray marching processor (240) configured to use volume ray marching by iterating at each ray marching step over all individual view rays for individually processing each view ray (21, 22, 23, 24) in its associated volume, wherein ray marching steps for a respective view ray are only performed within the associated volume and, at each ray marching step, the scalar value of the corresponding voxel is mapped to a color value and a transparency value of said corresponding voxel; and
a projection image updater (250) configured to update the value of the particular pixel in the projection image (30) by combining the respective voxel color and transparency values of the individual view rays after each ray marching step, wherein updating with the values of a particular voxel intersecting with a particular view ray is performed after the updating with all intersecting voxel values of voxels closer to the viewing point than the particular voxel, wherein processing non-transparent voxels of overlapping volumes at a same location is performed in sync for the respective individual view rays.

11. The system of claim 10, wherein volume ray marching processor (240) uses empty-space-skipping in that the individual processing of a particular view ray skips ray marching steps inside the associated volume which are associated with fully transparent voxels.

12. The system of any of the claims 10 to 11, further comprising a volume registration module (220) configured to register one or more of the plurality of volumes in relation to each other, wherein the origin of the local coordinate system of a first volume is known in a second volume, and vice versa.

13. The system of any of the claims 10 to 12, wherein the volume ray marching processor (240) further comprises a coordinate system converter 242 to convert, at the start of the ray marching process for each view ray, the respective view ray from a global coordinate system (xg, yg, zg) into a local coordinate system (xn, yn, zn) of its associated volume (110, 120, 130, 140) for volume ray marching in the associated volume.

14. The system of any of the claims 10 to 13, wherein the volume ray marching processor, when individually processing (1300) a first view ray (21), uses a first predefined transfer function for mapping scalar values of voxels of the respective associated volume (110) to respective color values and a transparency values, and when individually processing (1300) a second view ray (22), uses a second predefined transfer function for mapping scalar values of voxels of the respective associated volume (120) to respective color values and a transparency values.

15. The system of any of the claims 10 to 14, wherein the 3D data for a particular volume further comprises a distance map which stores for each voxel of the particular volume the distance to the next non-transparent voxel in the volume, and wherein ray marching with a particular view ray performs a ray marching jump comprising, in accordance with the distance map, a multiple of the distance between two ray marching steps so that the next ray marching step is performed close to the next non-transparent voxel.

## Patentansprüche

1. Computer-implementiertes Verfahren (1000) zur direkten Mehrvolumendarstellung, wobei das Verfahren umfasst:
Empfangen (1100) von 3D-Daten, die eine dreidimensionale Szene (100) spezifizieren, die eine Mehrzahl von Volumina (110, 120, 130, 140) umfasst, wobei jedes Volumen eine Mehrzahl von Voxeln (pv_n) umfasst, wobei jedes Voxel eines bestimmten Volumens einen Skalarwert aufweist, der das Ergebnis eines Bildgebungsvorgangs zur Messung einer physikalischen Eigenschaft eines Bildgebungssubjekts ist;
Erzeugen (1200), an einer Sichtposition (10), eines View-Mehrstrahls (20) in der Richtung eines bestimmten Pixels eines Projektionsbildes (30), wobei das Projektionsbild zwischen der Sichtposition (10) und der Szene (100) angeordnet ist, wobei das bestimmte Pixel einen Wert hat, der eine Projektion aller Szenenvoxel repräsentiert, die sich mit dem View-Mehrstrahl hinter dem Projektionsbild (30) schneiden, wobei der View-Mehrstrahl (20) eine Mehrzahl von einzelnen Sehstrahlen (21, 22, 23, 24) mit demselben Startpunkt und derselben Richtung repräsentiert, wobei jeder einzelne Sehstrahl einem der Volumina (110, 120, 130, 140) in der Szene (100) zugeordnet ist;
Verwenden von Volumenstrahl-Marching durch Iterieren bei jedem Strahl-Marching-Schritt über alle einzelnen Sehstrahlen zum einzelnen Verarbeiten (1300) jedes Sehstrahls (21, 22, 23, 24) in seinem zugeordneten Volumen, wobei Strahl-Marching-Schritte für einen jeweiligen Sehstrahl nur innerhalb des zugeordneten Volumens durchgeführt werden und bei jedem Strahl-Marching-Schritt der Skalarwert des entsprechenden Voxels auf einen Farbwert und einen Transparenzwert des entsprechenden Voxels abgebildet wird;
Aktualisieren (1400) des Wertes des bestimmten Pixels in dem Projektionsbild (30) durch Kombinieren der jeweiligen Voxel-Farb- und Transparenzwerte der einzelnen Sehstrahlen nach jedem Strahl-Marching-Schritt, wobei das Aktualisieren mit den Werten eines bestimmten Voxels, das sich mit einem bestimmten Sehstrahl schneidet, nach dem Aktualisieren mit allen schneidenden Voxelwerten von Voxeln durchgeführt wird, die näher an dem Sichtpunkt liegen als das bestimmte Voxel, wobei das Verarbeiten von nicht-transparenten Voxeln von überlappenden Volumina an einer gleichen Stelle synchron für die jeweiligen einzelnen Sehstrahlen durchgeführt wird; und
Durchführen (1500) der Schritte des Erzeugens (1200), Verarbeitens (1300) und Aktualisierens (1400) für noch nicht aktualisierte Pixel des Projektionsbildes (30).

2. Verfahren nach Anspruch 1, wobei das Volumenstrahl-Marching das Überspringen von Leerräumen verwendet, indem die einzelne Verarbeitung eines bestimmten Sehstrahls Strahl-Marching-Schritte innerhalb des zugeordneten Volumens, die mit vollständig transparenten Voxeln verbunden sind, überspringt.

3. Verfahren nach einem der vorhergehenden Ansprüche, wobei der Bildgebungsvorgang ein Bilderfassungs- oder Bilderzeugungsprozess ist, der zu volumetrischen Bildern führt.

4. Verfahren nach einem der vorhergehenden Ansprüche, wobei der Bildgebungsvorgang ausgewählt ist aus: Computertomographie, Magnetresonanztomographie, optischer Kohärenztomographie, Positronenemissionstomographie, Einzelphotonen-Emissions-Computertomographie und 3D-Ultraschall.

5. Verfahren nach einem der Ansprüche 1 bis 4, wobei die physikalische Eigenschaft ausgewählt ist aus: der Absorption von Röntgenstrahlung, der Anzahl von Protonen, der Lichtdurchlässigkeit, der Positronenemission von injizierten Radiopharmaka und der akustischen Impedanz.

6. Verfahren nach einem der vorhergehenden Ansprüche, wobei zwei oder mehr der Mehrzahl von Volumina in Bezug zueinander registriert werden, wobei der Ursprung des lokalen Koordinatensystems eines ersten Volumens in einem zweiten Volumen bekannt ist und umgekehrt.

7. Verfahren nach einem der vorhergehenden Ansprüche, wobei zu Beginn des Strahl-Marching-Prozesses für jeden Sehstrahl der jeweilige Sehstrahl von einem globalen Koordinatensystem (xg, yg, zg) in ein lokales Koordinatensystem (xn, yn, zn) seines zugeordneten Volumens (110, 120, 130, 140) umgewandelt wird.

8. Verfahren nach einem der vorhergehenden Ansprüche, wobei die einzelne Verarbeitung (1300) eines ersten Sehstrahls (21) eine erste vordefinierte Übertragungsfunktion zum Abbilden von Skalarwerten von Voxeln des jeweiligen zugeordneten Volumens (110) auf jeweilige Farbwerte und Transparenzwerte verwendet, und die einzelne Verarbeitung (1300) eines zweiten Sehstrahls (22) eine zweite vordefinierte Übertragungsfunktion zum Abbilden von Skalarwerten von Voxeln des jeweiligen zugeordneten Volumens (120) auf jeweilige Farbwerte und Transparenzwerte verwendet.

9. Computerprogrammprodukt zur direkten Mehrvolumendarstellung, wobei das Computerprogrammprodukt computerlesbare Anweisungen umfasst, die, wenn sie in einen Speicher einer Rechenvorrichtung geladen und von mindestens einem Prozessor der Rechenvorrichtung ausgeführt werden, bewirken, dass die Rechenvorrichtung das Verfahren nach einem der vorhergehenden Ansprüche durchführt.

10. Computersystem (200) zur direkten Mehrvolumendarstellung, umfassend:
eine Schnittstelle (210), die dazu eingerichtet ist, 3D-Daten zu empfangen, die eine dreidimensionale Szene (100) spezifizieren, die eine Mehrzahl von Volumina (290) umfasst, wobei jedes Volumen eine Mehrzahl von Voxeln (pv_n) umfasst, wobei jedes Voxel eines bestimmten Volumens einen Skalarwert hat, der das Ergebnis eines Bildgebungsvorgangs zur Messung einer physikalischen Eigenschaft eines Bildgebungssubjekts ist;
einen Mehrstrahl-Generator (230), der dazu konfiguriert ist, an einer Sichtposition (10) einen View-Mehrstrahl (20) in der Richtung eines bestimmten Pixels eines Projektionsbildes (30) zu erzeugen, wobei sich das Projektionsbild zwischen der Sichtposition (20) und der Szene (100) befindet, wobei das bestimmte Pixel einen Wert hat, der eine Projektion aller Szenenvoxel repräsentiert, die sich mit dem View-Mehrstrahl hinter dem Projektionsbild (30) schneiden, wobei der View-Mehrstrahl (20) eine Mehrzahl von einzelnen Sehstrahlen (21, 22, 23, 24) mit demselben Startpunkt und derselben Richtung repräsentiert, wobei jeder einzelne Sehstrahl einem der Volumina (110, 120, 130, 140) in der Szene (100) zugeordnet ist;
einen Volumenstrahl-Marching-Prozessor (240), der dazu konfiguriert ist, Volumenstrahl-Marching zu verwenden, indem er bei jedem Strahl-Marching-Schritt über alle einzelnen Sehstrahlen iteriert, um jeden Sehstrahl (21, 22, 23, 24) in seinem zugeordneten Volumen einzeln zu verarbeiten, wobei Strahl-Marching-Schritte für einen jeweiligen Sehstrahl nur innerhalb des zugeordneten Volumens durchgeführt werden und bei jedem Strahl-Marching-Schritt der Skalarwert des entsprechenden Voxels auf einen Farbwert und einen Transparenzwert des entsprechenden Voxels abgebildet wird; und
einen Projektionsbild-Aktualisierer (250), der dazu konfiguriert ist, den Wert des bestimmten Pixels in dem Projektionsbild (30) durch Kombinieren der jeweiligen Voxel-Farb- und Transparenzwerte der einzelnen Sehstrahlen nach jedem Strahl-Marching-Schritt zu aktualisieren, wobei das Aktualisieren mit den Werten eines bestimmten Voxels, das sich mit einem bestimmten Sehstrahl schneidet, nach dem Aktualisieren mit allen schneidenden Voxelwerten von Voxeln, die näher an dem Sichtpunkt liegen als das bestimmte Voxel, durchgeführt wird, wobei das Verarbeiten von nicht-transparenten Voxeln von überlappenden Volumina an einer gleichen Stelle synchron für die jeweiligen einzelnen Sehstrahlen durchgeführt wird.

11. System nach Anspruch 10, wobei der Volumen-Strahl-Marching-Prozessor (240) das Überspringen von Leerräumen verwendet, indem die einzelne Verarbeitung eines bestimmten Sehstrahls Strahl-Marching-Schritte innerhalb des zugeordneten Volumens, die den vollständig transparenten Voxeln zugeordnet sind, überspringt.

12. System nach einem der Ansprüche 10 bis 11, ferner umfassend ein Volumenregistrierungsmodul (220), das dazu konfiguriert ist, eines oder mehrere der Mehrzahl von Volumina in Bezug zueinander zu registrieren, wobei der Ursprung des lokalen Koordinatensystems eines ersten Volumens in einem zweiten Volumen bekannt ist, und umgekehrt.

13. System nach einem der Ansprüche 10 bis 12, wobei der Volumenstrahl-Marching-Prozessor (240) ferner einen Koordinatensystem-Wandler (242) umfasst, um zu Beginn des Strahl-Marching-Prozesses für jeden Sehstrahl den jeweiligen Sehstrahl von einem globalen Koordinatensystem (xg, yg, zg) in ein lokales Koordinatensystem (xn, yn, zn) seines zugeordneten Volumens (110, 120, 130, 140) für das Volumenstrahl-Marching in dem zugeordneten Volumen umzuwandeln.

14. System nach einem der Ansprüche 10 bis 13, wobei der Volumenstrahl-Marching-Prozessor bei der einzelnen Verarbeitung (1300) eines ersten Sehstrahls (21) eine erste vordefinierte Übertragungsfunktion zur Abbildung von Skalarwerten von Voxeln des jeweiligen zugeordneten Volumens (110) auf jeweilige Farbwerte und Transparenzwerte verwendet, und bei der einzelnen Verarbeitung (1300) eines zweiten Sehstrahls (22) eine zweite vordefinierte Übertragungsfunktion zur Abbildung von Skalarwerten von Voxeln des jeweiligen zugeordneten Volumens (120) auf jeweilige Farbwerte und Transparenzwerte verwendet.

15. System nach einem der Ansprüche 10 bis 14, wobei die 3D-Daten für ein bestimmtes Volumen ferner eine Abstandskarte umfassen, die für jedes Voxel des bestimmten Volumens den Abstand zum nächsten nicht-transparenten Voxel in dem Volumen speichert, und wobei das Strahl-Marching mit einem bestimmten Sehstrahl einen Strahl-Marching-Sprung durchführt, der in Übereinstimmung mit der Abstandskarte ein Vielfaches des Abstands zwischen zwei Strahl-Marching-Schritten umfasst, so dass der nächste Strahl-Marching-Schritt in der Nähe des nächsten nicht-transparenten Voxels durchgeführt wird.

## Revendications

1. Procédé mis en oeuvre par ordinateur (1000) pour un rendu multivolume direct, le procédé comprenant les étapes consistant à :
recevoir (1100) des données 3D spécifiant une scène tridimensionnelle (100) comprenant une pluralité de volumes (110, 120, 130, 140), chaque volume comprenant une pluralité de voxels (pv_n), dans lequel chaque voxel d'un volume particulier présente une valeur scalaire qui est le résultat d'une procédure d'imagerie pour mesurer une propriété physique d'un sujet d'imagerie ;
générer (1200), dans une position de visualisation (10), un rayon multiple de vue (20) dans la direction d'un pixel particulier d'une image de projection (30), l'image de projection étant située entre la position de visualisation (10) et la scène (100), dans lequel le pixel particulier présente une valeur représentant une projection de tous les voxels de la scène intersectant le rayon multiple de vue derrière l'image de projection (30), le rayon multiple de vue (20) représentant une pluralité de rayons de vue individuels (21, 22, 23, 24) ayant le même point de départ et la même direction, dans lequel chaque rayon de vue individuel est associé à l'un des volumes (110, 120, 130, 140) de la scène (100) ;
utiliser un lancer de rayon volumétrique itérant à chaque étape de lancer de rayon sur tous les rayons de vue individuels en vue d'un traitement individuel (1300) de chaque rayon de vue (21, 22, 23, 24) dans son volume associé, dans lequel les étapes de lancer de rayon pour un rayon de vue respectif ne sont effectuées qu'à l'intérieur du volume associé, et à chaque étape de lancer de rayon, la valeur scalaire du voxel correspondant est mappée sur une valeur de couleur et une valeur de transparence dudit voxel correspondant ;
mettre à jour (1400) la valeur du pixel particulier sur l'image de projection (30) en combinant les valeurs respectives de couleur et de transparence de voxel des rayons de vue individuels après chaque étape de lancer de rayon, dans lequel la mise à jour avec les valeurs d'un voxel particulier intersectant un rayon de vue particulier est effectuée après la mise à jour avec toutes les valeurs de voxel d'intersection des voxels plus près du point de visualisation que le voxel particulier, dans lequel le traitement des voxels non transparents de volumes qui se chevauchent en un même endroit est effectué en synchronisme pour les rayons de vue individuels respectifs ; et
effectuer (1500) les étapes de génération (1200), de traitement (1300) et de mise à jour pour des pixels pas encore mis à jour de l'image de projection (30).

2. Procédé selon la revendication 1, dans lequel le lancer de rayon volumétrique utilise l'omission des espaces vides en ce que le traitement individuel d'un rayon de vue particulier omet celles des étapes de lancer de rayon à l'intérieur du volume associé qui sont associées à des voxels entièrement transparents.

3. Procédé selon l'une quelconque des revendications précédentes, dans lequel la procédure d'imagerie est un processus d'acquisition d'image ou de génération d'image aboutissant à des images volumétriques.

4. Procédé selon l'une quelconque des revendications précédentes, dans lequel la procédure d'imagerie est sélectionnée parmi l'une des suivantes : l'imagerie de tomographie par ordinateur, l'imagerie par résonance magnétique, l'imagerie de tomographie en cohérence optique, l'imagerie de tomographie par émission de positrons, l'imagerie de tomographie par ordinateur à émission monophotonique, et l'imagerie par ultrasons 3D.

5. Procédé selon l'une quelconque des revendications 1 à 4, dans lequel la propriété physique est sélectionnée parmi : l'absorption de rayons X, le nombre de protons, la transmissivité de lumière, l'émission de positrons de produits radiopharmaceutiques injectés, et l'impédance acoustique.

6. Procédé selon l'une quelconque des revendications précédentes, dans lequel deux ou plusieurs de la pluralité de volumes sont alignés les uns par rapport aux autres, dans lequel l'origine du système de coordonnées locales d'un premier volume est connue dans un deuxième volume et vice versa.

7. Procédé selon l'une quelconque des revendications précédentes, dans lequel du départ du processus de lancer de rayon pour chaque rayon de vue, le rayon de vue respectif est converti d'un système de coordonnées globales (xg, yg, zg) en un système de coordonnées locales (xn, yn, zn) de son volume associé (110, 120, 130, 140).

8. Procédé selon l'une quelconque des revendications précédentes, dans lequel le traitement individuel (1300) d'un premier rayon de vue (21) utilise une première fonction de transfert prédéfinie pour mapper des valeurs scalaires des voxels du volume associé respectif (110) sur des valeurs de couleur et des valeurs de transparence respectives, et le traitement individuel (1300) d'un deuxième rayon de vue (22) utilise une deuxième fonction de transfert prédéfinie pour mapper des valeurs scalaires des voxels du volume associé respectif (120) sur des valeurs de couleur et des valeurs de transparence respectives.

9. Produit de programme informatique pour un rendu multivolume direct, le produit de programme informatique comprenant des instructions lisibles par ordinateur qui, lorsqu'elles sont chargées dans une mémoire d'un dispositif informatique et exécutées par au moins un processeur du dispositif informatique, font que le dispositif informatique exécute le procédé selon l'une quelconque des revendications précédentes.

10. Système informatique (200) pour un rendu multivolume direct, comprenant :
une interface (210) adaptée pour recevoir des données 3D spécifiant une scène tridimensionnelle (100) comprenant une pluralité de volumes (290), chaque volume comprenant une pluralité de voxels (pv_n), dans lequel chaque voxel d'un volume particulier présente une valeur scalaire qui est le résultat d'une procédure d'imagerie pour mesurer une propriété physique d'un sujet d'imagerie ;
un générateur de rayons multiples (230) configuré pour générer, dans une position de visualisation (10), un rayon multiple de vue (20) dans la direction d'un pixel particulier d'une image de projection, (30), l'image de projection étant située entre la position de visualisation (20) et la scène (100), dans lequel le pixel particulier présente une valeur représentant une projection de tous les voxels de la scène intersectant le rayon multiple de vue derrière l'image de projection (30), le rayon multiple de vue (20) représentant une pluralité de rayons de vue individuels (21, 22, 23, 24) ayant le même point de départ et la même direction, dans lequel chaque rayon de vue individuel est associé à l'un des volumes (110, 120, 130, 140) de la scène (100) ;
un processeur de lancer de rayon volumétrique (240) configuré pour utiliser un lancer de rayon volumétrique en itérant à chaque étape de lancer de rayon par tous les rayons de vue individuels pour un traitement individuel de chaque rayon de vue (21, 22, 23, 24) dans son volume associé, dans lequel les étapes de lancer de rayons pour un rayon de vue respectif ne sont effectuées qu'à l'intérieur du volume associé, et à chaque étape de lancer de rayon, la valeur scalaire du voxel correspondant est mappée sur une valeur de couleur et une valeur de transparence dudit voxel correspondant ; et
un dispositif de mise à jour d'image de projection (250) configuré pour mettre à jour la valeur du pixel particulier sur l'image de projection (30) en combinant les valeurs respectives de couleur et de transparence de voxel des rayons de vue individuels après chaque étape de lancer de rayon, dans lequel la mise à jour avec les valeurs d'un voxel particulier intersectant un rayon de vue particulier est effectuée après la mise à jour avec toutes les valeurs de voxel d'intersection des voxels plus près du point de visualisation que le voxel particulier, dans lequel le traitement de voxels non transparents de volumes qui se chevauchent en un même endroit est effectué en synchronisme pour les rayons de vue individuels respectifs.

11. Système selon la revendication 10, dans lequel le processeur de lancer de rayon volumétrique (240) utilise l'omission des espaces vides en ce que le traitement individuel d'un rayon de vue particulier omet celles des étapes de lancer de rayon à l'intérieur du volume associé qui sont associées à des voxels entièrement transparents.

12. Système selon l'une quelconque des revendications 10 à 11, comprenant en outre un module d'alignement de volume (220) configuré pour aligner un ou plusieurs de la pluralité de volumes les uns par rapport aux autres, dans lequel l'origine du système de coordonnées locales d'un premier volume est connue dans un deuxième volume, et vice versa.

13. Système selon l'une quelconque des revendications 10 à 12, dans lequel le processeur de lancer de rayon volumétrique (240) comprend en outre un convertisseur de système de coordonnées (242) pour convertir au départ du processus de lancer de rayon pour chaque rayon de vue, le rayon de vue respectif d'un système de coordonnées globales (xg, yg, zg) en un système de coordonnées locales (xn, yn, zn) de son volume associé (110, 120, 130, 140) pour un lancer de rayon volumétrique dans le volume associé.

14. Système selon l'une quelconque des revendications 10 à 13, dans lequel le processeur de lancer de rayon volumétrique, lorsqu'il traite (1300) individuellement un premier rayon de vue (21), utilise une première fonction de transfert prédéfinie pour mapper des valeurs scalaires des voxels du volume associé (110) respectif sur des valeurs de couleur et des valeurs de transparence respectives, et lorsqu'il traite (1300) individuellement un deuxième rayon de vue (22), utilise une deuxième fonction de transfert prédéfinie pour mapper des valeurs scalaires des voxels du volume associé (120) respectif sur des valeurs de couleur et des valeurs de transparence respectives.

15. Système selon l'une quelconque des revendications 10 à 14, dans lequel les données 3D pour un volume particulier comprennent en outre une carte de distance qui stocke pour chaque voxel du volume particulier la distance jusqu'au voxel non transparent suivant dans le volume, et dans lequel le lancer de rayon avec un rayon de vue particulier effectue un saut de lancer de rayon comprenant, conformément à la carte de distance, un multiple de la distance entre deux étapes de lancer de rayon de sorte que l'étape suivante de lancer de rayon est effectuée près du voxel non-transparent suivant.
